# EUROPEAN PATENT APPLICATION

(11) **EP 2 787 376 A1**
(43) Date of publication of application: **08.10.2014**
(21) Application number: 14161002.2
(22) Date of filing: 21.03.2014
(51) Int. Cl.: G02B 5/02, G02B 5/04

(54) **Power generating module and light guiding film thereof**

(30) Priority: 03.04.2013 TW 102112012
(71) Applicant: Chi Lin Technology Co., Ltd., 71758 Rende Dist., Tainan City (TW)
(72) Inventor: Chiang, Yi-Hsing, 71758 Rende Dist., Tainan City (TW); Chang, Te-Hung, 71758, ., Rende Dist., Tainan City (TW); Tsai, Jung-Lieh, 71758 Rende Dist., Tainan City (TW); Fan, Cho-Han, 71758 Rende Dist., Tainan City (TW)
(74) Representative: 2K Patentanwälte Blasberg Kewitz & Reichel

(57) **Abstract**

The present invention relates to a power generating module and light guiding film (1) thereof. The light guiding film includes a film base (11) and at least one microstructure (12). The microstructure is disposed on a side surface (112) of the film base. After the input light beams (30) pass through the light guiding film, the total luminous flux of the output light beams (31) with the output angles from 70 to 110 degrees is more than 40% of the total luminous flux of the output light beams with the output angles from 0 to 180 degrees. Therefore, most of the output light beams emit in the normal direction.

## Description

### BACKGROUND OF THE INVENTION

### FIELD OF THE INVENTION

The present invention relates to a power generating module, and, in particular, to a power generating module having a light guiding film.

### DESCRIPTION OF THE RELATED ART

The conventional solar cell module generates only a modicum of its potential power when the sunlight beam has a large incident angle. Because the sun moves during daytime, the conventional solar cell module either is disposed on an open space, such as a roof, or further includes a solar tracking system. Whichever way you look at it, the conventional solar cell module needs a very large open space to be laid out horizontally, which limits its actual implementation. In addition, the solar tracking system can ensure that the sunlight beam always illuminates the conventional solar cell module at a low incident angle to maximize the amount of power generated. However, the solar tracking system is very expensive, which results in increased manufacturing costs of the conventional solar cell module as a whole.

Therefore, it is necessary to provide a power generating module and light guiding film thereof to solve the aforementioned problems.

### SUMMARY OF THE INVENTION

The present invention is directed to a light guiding film, which comprises a film base and at least one microstructure. The film base has a first side surface and a second side surface opposite the first side surface. The microstructure is disposed on the first side surface or the second side surface of the film base.

Whereby a plurality of incident light beams become a plurality of output light beams after passing through the light guiding film. An output angle is defined as the angle between the output light beam and the light guiding film. The output angle is defined as 0 degree when the output light beam is downward and parallel with the light guiding film. The output angle is defined as 180 degrees when the output light beam is upward and parallel with the light guiding film. The total luminous flux of the output light beams with the output angles from 70 to 110 degrees is more than 40% of the total luminous flux of the output light beams with the output angles from 0 to 180 degrees.

In the present invention, the light guiding film can guide the incident light beams to emit along a direction perpendicular to the light guiding film. That is, the output light beams are substantially normal to the light guiding film 1.

The present invention is further directed to a power generating module, which comprises a light guiding film and a photoelectric conversion element. The light guiding film is the same as the aforementioned light guiding film. The photoelectric conversion element is disposed adjacent to the first side surface or the second side surface of the film base to receive output light beams from the light guiding film.

### BRIEF DESCRIPTION OF THE DRAWINGS

- FIG. 1: is a perspective view of a light guiding film according to an embodiment of the present invention;
- FIG. 2: is a side view of the light guiding film of FIG. 1;
- FIG. 3: shows a partially enlarged view of FIG. 2;
- FIG. 4: is a partially enlarged view of a light guiding film according to another embodiment of the present invention;
- FIG. 5: is a schematic view of a testing apparatus to test the light guiding film according to the present invention;
- FIG. 6: is a comparative example that uses the testing apparatus of FIG. 5;
- FIG. 7: is a third type of the light guiding film tested by the testing apparatus of FIG. 5;
- FIG. 8: is a side view of a power generating module according to an embodiment of the present invention;
- FIG. 9: is comparative diagram of the luminescence efficiency of the power generating module of FIG. 8 and the power generating module of the comparative example; and
- FIG. 10: is a side view of a power generating module according to another embodiment of the present invention.

### DETAILED DESCRIPTION OF THE INVENTION

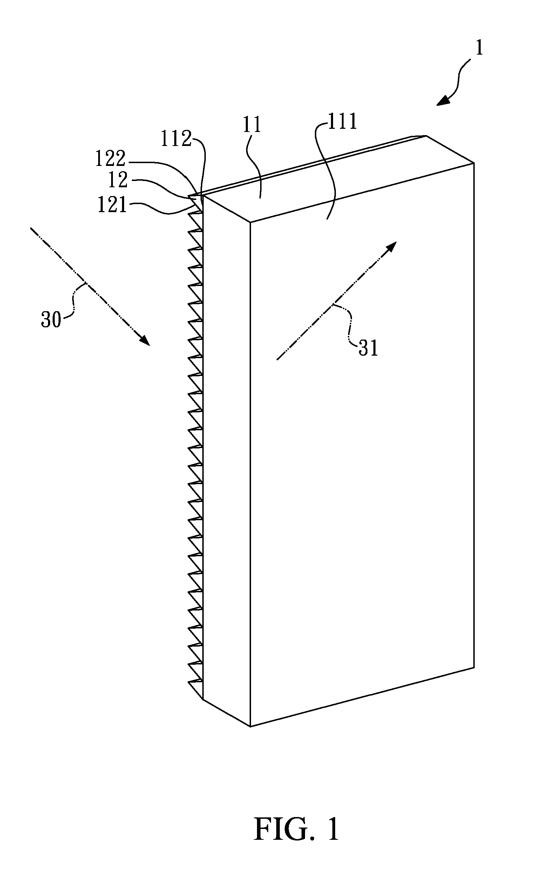

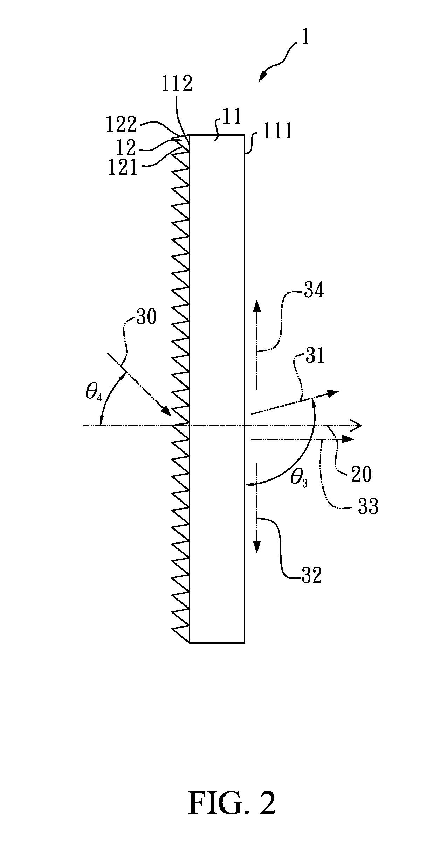

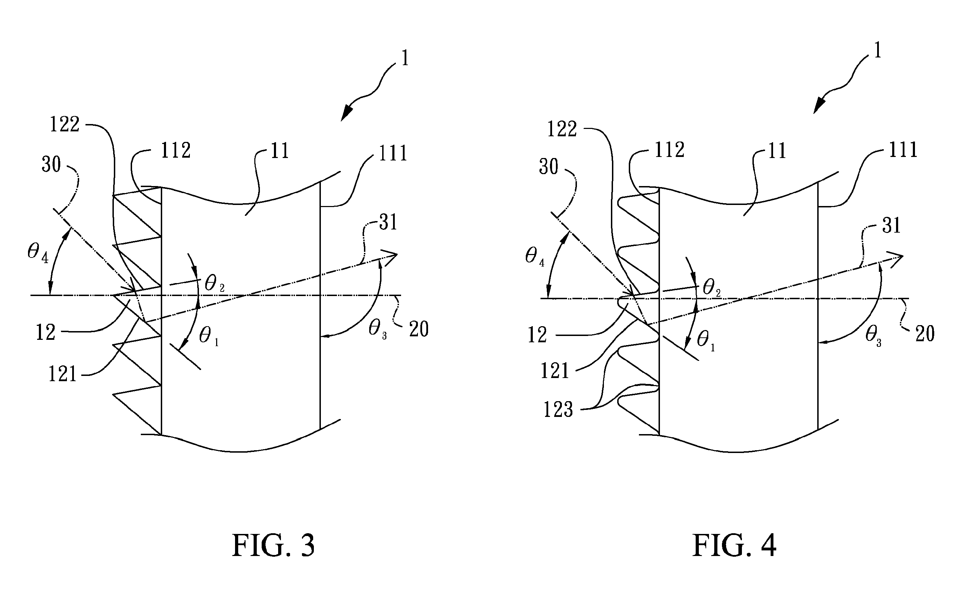

FIG. 1 shows a perspective view of a light guiding film according to an embodiment of the present invention. FIG. 2 shows a side view of the light guiding film of FIG. 1. FIG. 3 shows a partially enlarged view of FIG. 2. The light guiding film 1 comprises a film base 11 and at least one microstructure 12. In this embodiment, the light guiding film 1 comprises a plurality of microstructures 12. The film base 11 has a first side surface 111 and a second side surface 112, wherein the second side surface 112 is opposite the first side surface 111.

The microstructure 12 is disposed on the first side surface 111 or the second side surface 112 of the film base 11. In this embodiment, the microstructure 12 is disposed on the second side surface 112 of the film base 11, wherein the microstructure 12 comprises a first surface 121 and a second surface 122. The second surface 122 is above the first surface 121. A reference plane 20 is defined as a phantom plane that is perpendicular to the first side surface 111 or the second side surface 112 of the film base 11. That is, when the light guiding film 1 stands upright, the reference plane 20 is a phantom horizontal plane. A first inclination angle θ₁ is formed between the first surface 121 and the reference plane 20. A second inclination angle θ₂ is formed between the second surface 122 and the reference plane 20.

In this embodiment, the value of the first inclination angle θ₁ is between 25 to 60 degrees, and the value of the second inclination angle θ₂ is between 0 to 15 degrees. The value of the angle between the first surface 121 and the second surface 122 (that is, the sum of the first inclination angle θ₁ and the second inclination angle θ₂) is between 25 to 75 degrees. Preferably, the value of the first inclination angle θ₁ is different from that of the second inclination angle θ₂, wherein the first inclination angle θ₁ is between 30 to 55 degrees, the second inclination angle θ₂ is between 5 to 10 degrees, and the value of the angle between the first surface 121 and the second surface 122 (that is, the sum of the first inclination angle θ₁ and the second inclination angle θ₂) is between 35 to 65 degrees. In this embodiment, the cross section of the microstructure 12 is substantially triangular, and the first surface 121 intersects the second surface 122.The material of the film base 11 is the same as that of the microstructure 12. They are made of a light transmissible material, such as polymethyl methacrylate (PMMA), arcylic-based polymer, polycarbonate (PC), polyethylene terephthalate (PET), polystyrene (PS) or a copolymer thereof, with a refraction index of 1.35 to 1.65 and a light transmittance between 0.75 to 0.95. It is to be understood that the material of the film base 11 may be different from that of the microstructure 12.

After passing through the light guiding film 1, a plurality of incident light beams 30 become a plurality of output light beams 31 during the actual application of the invention. In this embodiment, the incident light beams 30 are sunlight beams, and the microstructure 12 faces the incident light beams 30. In another embodiment, the microstructure 12 faces away from the incident light beams 30, so the incident light beams 30 illuminate the first side surface 111 of the film base 11 instead.

As shown in FIG. 2, an output angle θ₃ is defined as the angle between the output light beam 31 and the light guiding film 1. The output angle θ₃ is defined as 0 degree when the output light beam (i.e., the output light beam 32) is directed downward and parallel with the light guiding film 1. The output angle θ₃ is defined as 90 degree when the output light beam (i.e., the output light beam 33) is horizontal and parallel with the reference plane 20. The output angle θ₃ is defined as 180 degrees when the output light beam (i.e., the output light beam 34) is directed upward and parallel with the light guiding film 1.

An incident angle θ₄ is defined as the angle between the incident light beam 30 and the reference plane 20. The incident angle θ₄ is defined as positive when the incident light beam 30 is directed downward, is defined as 0 degrees when the incident light beam (not shown) is horizontal and parallel with the reference plane 20, and is defined as negative when the incident light beam (not shown) is directed upward.

As shown in FIG. 3, the incident light beams 30 enter the microstructure 12 through the second surface 122 of the microstructure 12 by refraction, and are reflected by the first surface 121 of the microstructure 12. Then, the reflected incident light beams 30 pass through the film base 11 to become the output light beams 31. Note that the incident light beams 30 are reflected by the first surface 121 due to the specific design of the first inclination angle θ₁ and the second inclination angle θ₂. Furthermore, the output light beams 31 concentrate in a specific range of the output angle θ₃, so the total luminous flux of the output light beams 31 within a specific range of the output angle is a peak when compared to other output light beams 31 with other range of the output angle.

In this embodiment, the incident angles θ₄ of the incident light beams 30 range from 10 to 80 degrees, and the total luminous flux of the output light beams 31 with output angles ranging from 70 to 110 degrees is more than 40% (preferably, 50%, 60% or 70%) of the total luminous flux of the output light beams 31 with the output angles ranging from 0 to 180 degrees.

FIG. 4 shows a partially enlarged view of a light guiding film according to another embodiment of the present invention. The microstructure 12 may further comprise a curved chamfer 123. The curved chamfer 123 is disposed between the first surface 121 and the second surface 122, and is adjacent to the first surface 121 and the second surface 122. However, in another embodiment, the curved chamfer 123 is disposed between two microstructures 12.

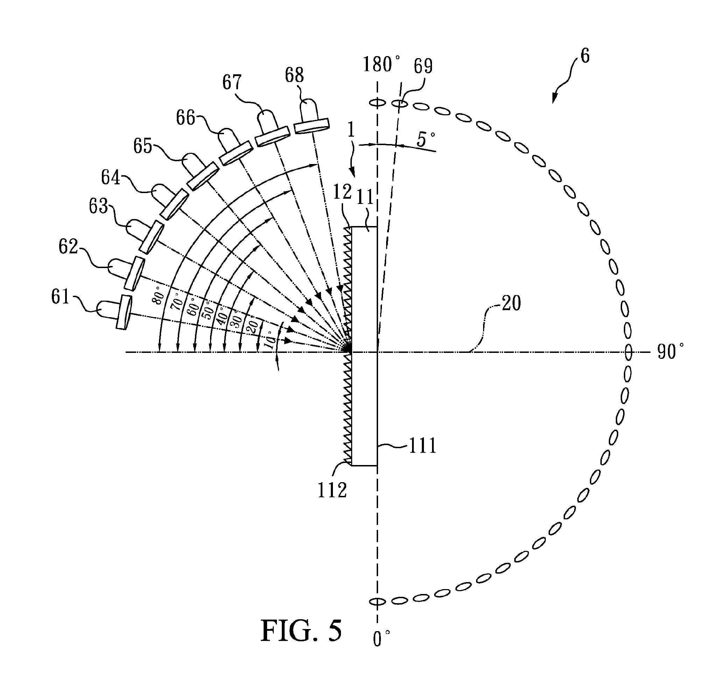

FIG. 5 shows a schematic view of a testing apparatus to test the light guiding film according to the present invention. The testing apparatus 6 includes eight light sources 61, 62, 63, 64, 65, 66, 67, 68 and thirty seven receivers 69. The light guiding film 1 is disposed in the center of the testing apparatus 6. The light sources 61, 62, 63, 64, 65, 66, 67, 68 are disposed on the left side of the light guiding film 1, and the receivers 69 are disposed on the right side of the light guiding film 1. The receivers 69 surround the light guiding film 1 to form a semicircular appearance with equivalent intervals for the receivers 69 to measure the luminous flux (for example, lumen) of the output light beams 31 at every 5 degrees from 0 to 180 degrees.

The light sources 61, 62, 63, 64, 65, 66, 67 and 68 are used to generate incident light beams at 10, 20, 30, 40, 50, 60, 70, and 80 degrees, respectively. The light sources 61, 62, 63, 64, 65, 66, 67, 68 are turned on at the same time.

Table 1 below shows the testing results of a first type of the light guiding film 1. In the first type of the light guiding film 1, the value of the first inclination angle θ₁ is 30 degrees, and the value of the second inclination angle θ₂ is 10 degrees. In the Table 1, the ratio of luminous flux (84.23%) of the θₜ 0°∼180° represents the ratio of the total luminous flux of the output light beams 31 measured by the receivers 69 ranging from 0 to 180 degrees to the total luminous flux provided by the light sources 61, 62, 63, 64, 65, 66, 67, 68. The ratio of energy (77.19%) of the θₜ 60°∼120° represents the ratio of the total luminous flux of the output light beams 31 measured by the receivers 69 ranging from 60 to 120 degrees to the total luminous flux provided by the light sources 61, 62, 63, 64, 65, 66, 67, 68. The ratio of luminous flux (63.97%) of the θₜ 70°∼110° represents the ratio of the total luminous flux of the output light beams 31 measured by the receivers 69 ranging from 70 to 110 degrees to the total luminous flux provided by the light sources 61, 62, 63, 64, 65, 66, 67, 68. The ratio of energy (42.72%) of the θₜ 80°∼100° represents the ratio of the total luminous flux of the output light beams 31 measured by the receivers 69 ranging from 80 to 100 degrees to the total energy provided by the light sources 61, 62, 63, 64, 65, 66, 67, 68.

The ratio of luminous flux (75.95%) of the θₜ 70°∼110°/ θₜ 0°∼180° represents the ratio of the luminous flux ratio (63.97%) of the θₜ 70°∼110° to the luminous flux ratio (84.23%) of the θₜ 0°∼180°.

**Table 1: the testing results of the first type of the light guiding film 1**

| Range of output angle | Ratio of luminous flux |
|---|---|
| θₜ 0°∼180° | 84.23% |
| θₜ 60°∼120° | 77.19% |
| θₜ 70°∼110° | 63.97% |
| θₜ 80°∼100° | 42.72% |
| θₜ 70°∼110°/θₜ 0°∼180° | 75.95% |

As shown in Table 1, because of the specific design of the first inclination angle θ₁ (30 degrees) and the second inclination angle θ₂(10 degrees), the ratio of luminous flux of θₜ 70°∼110°/ θₜ 0°∼180° is 75.95%, which means that 75.95% of the output light beams 31 are directed in the output angles ranging from 70 to 110 degrees. The range of the output angles ranging from 70 to 110 degrees is desired and preferable, because it shows that the light guiding film 1 can guide the incident light beams 30 to emit along a direction perpendicular to the light guiding film 1. That is, the output light beams 31 are substantially normal to the light guiding film 1.

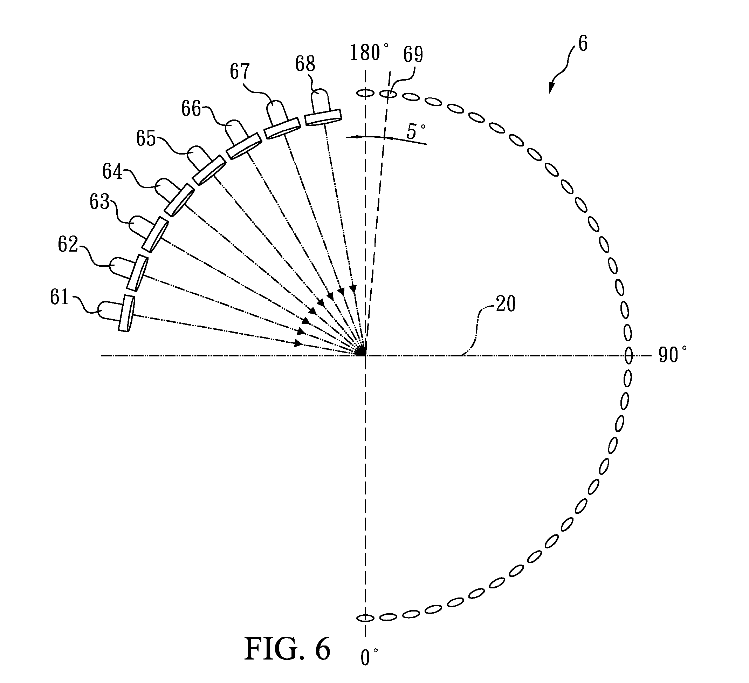

FIG. 6 shows a comparative example that uses the testing apparatus of FIG. 5. The difference between the comparative example and FIG. 5 is that there is no object to be tested in the comparative example. In addition, the testing conditions of FIG. 6 are the same as those of FIG. 5. Table 2 below shows the testing results of the comparative example.

**Table 2: the testing results of the comparative example**

| Range of output angle | Ratio of luminous flux |
|---|---|
| θₜ 0°∼180° | 100.00% |
| θₜ 60°∼120° | 37.50% |
| θₜ 70°∼110° | 25.00% |
| θₜ 80°∼100° | 12.50% |
| θₜ 70°∼110°/θₜ 0°∼180° | 25.00% |

As shown in Table 2, since there is no light guiding film in the comparative example, the comparative example does not have the guiding light's effect. Therefore, only 25.00% of the output light beams 31 exit at the output angles ranging from 70 to 110 degrees.

Table 3 below shows the testing results of a second type of the light guiding film 1. In the second type of the light guiding film 1, the value of the first inclination angle θ₁ is 30 degrees, and the value of the second inclination angle θ₂ is 5 degrees. The other testing conditions of the second type of the light guiding film 1 are the same as those of the first type of the light guiding film 1.

**Table 3: the testing results of the second type of the light guiding film 1**

| Range of output angle | Ratio of luminous flux |
|---|---|
| θₜ 0°∼180° | 89.80% |
| θₜ 60°∼120° | 82.61% |
| θₜ 70°∼110° | 75.08% |
| θₜ 80°∼100° | 53.51% |
| θₜ 70°∼110°/θₜ 0°∼180° | 83.61% |

As shown in Table 3, because of the specific design of the first inclination angle θ₁ (30 degrees) and the second inclination angle θ₂ (5 degrees), the ratio of luminous flux of θₜ 70°∼110°/ θₜ 0°∼180° is 83.61%, which means that 83.61% of the output light beams 31 are directed at output angles ranging from 70 to 110 degrees. The range of the output angles ranging from 70 to 110 degrees is desired and preferable, because it shows that the light guiding film 1 can guide the incident light beams 30 to emit along a direction perpendicular to the light guiding film 1. That is, the output light beams 31 are substantially normal to the light guiding film 1.

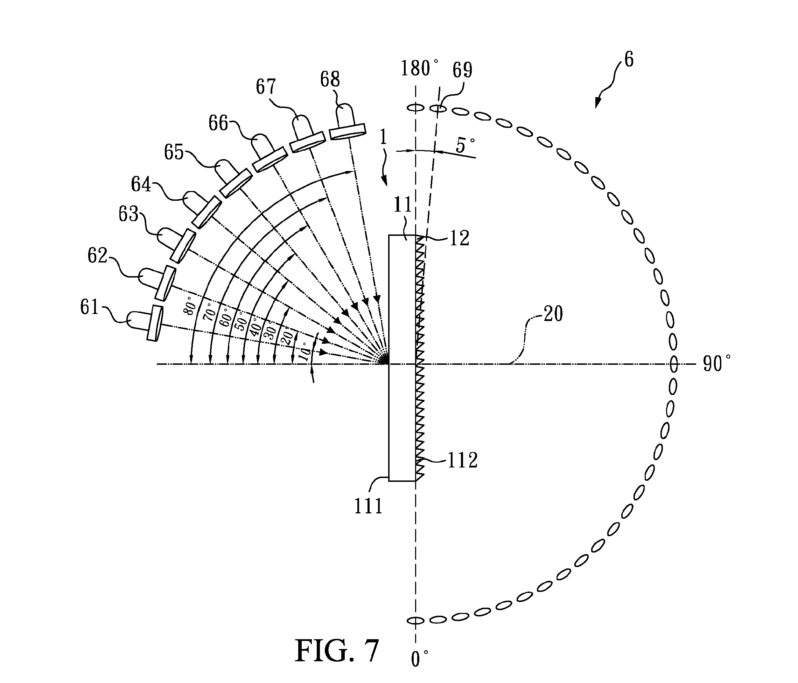

FIG. 7 shows a third type of the light guiding film 1 tested by using the testing apparatus of FIG. 5. In the third type of the light guiding film 1, the value of the first inclination angle θ₁ is 35 degrees, and the value of the second inclination angle θ₂ is 10 degrees. In addition, the microstructure 12 faces away from the light sources 61, 62, 63, 64, 65, 66, 67, 68, so the light sources 61, 62, 63, 64, 65, 66, 67, 68 illuminate the first side surface 111 of the film base 11. The other testing conditions of the third type of the light guiding film 1 are the same as those of the first type of the light guiding film 1. Table 4 below shows the testing results of the third type of the light guiding film 1.

**Table 4: the testing results of the third type of the light guiding film 1**

| Range of output angle | Ratio of luminous flux |
|---|---|
| θₜ 0°∼180° | 77.56% |
| θₜ 60°∼120° | 62.42% |
| θₜ 70°∼110° | 44.79% |
| θₜ 80°∼100° | 29.71% |
| θₜ 70°∼110°/θₜ 0°∼180° | 57.75% |

As shown in Table 4, the ratio of the luminous flux of θ₁ 70°∼110°/ θₜ 0°∼180° is 57.75%, which means that 57.75% of the output light beams 31 are directed at output angles ranging from 70 to 110 degrees. Therefore, most of the output light beams 31 of the third type of the light guiding film 1 are still substantially normal to the light guiding film 1.

Table 5 below shows the testing results of a fourth type of the light guiding film 1. In the fourth type of the light guiding film 1, the value of the first inclination angle θ₁ is 55 degrees, and the value of the second inclination angle θ₂ is 10 degrees. The other testing conditions of the fourth type of the light guiding film 1 are the same as those of the third type of the light guiding film 1.

**Table 5: the testing results of the fourth type of the light guiding film 1**

| Range of output angle | Ratio of luminous flux |
|---|---|
| θₜ 0°∼180° | 78.70% |
| θₜ 60°∼120° | 56.51% |
| θₜ 70°∼110° | 46.29% |
| θₜ 80°∼100° | 35.55% |
| θₜ 70°∼110°/θₜ 0°∼180° | 58.82% |

As shown in Table 5, the ratio of the luminous flux of θ₁ 70°∼110°/ θₜ 0°∼180° is 58.82%, which means that 58.82% of the output light beams 31 are directed at output angles ranging from 70 to 110 degrees. Therefore, most of the output light beams 31 of the fourth type of the light guiding film 1 are still substantially normal to the light guiding film 1.

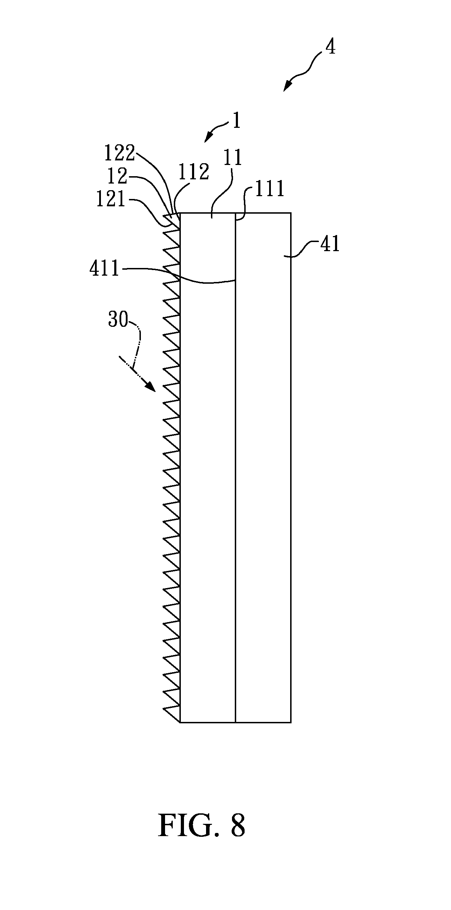

FIG. 8 shows a side view of a power generating module according to an embodiment of the present invention. The power generating module 4 comprises a light guiding film 1 and at least one photoelectric conversion element 41. The light guiding film 1 is the same as or similar to the light guiding film 1 as shown in FIGs. 1 to 4, and comprises a film base 11 and at least one microstructure 12. The photoelectric conversion element 41 is disposed adjacent to the first side surface 111 or the second side surface 112 of the film base 11 for receiving the output light beams 31 from the light guiding film 1. The photoelectric conversion element 41 has a light-receiving surface 411 that is used for receiving light beams and is substantially parallel with the film base 11. In this embodiment, the light guiding film 1 is the second type as described above. That is, the value of the first inclination angle θ₁ is 30 degrees, and the value of the second inclination angle θ₂ is 5 degrees. It is to be understood that the light guiding film 1 can be replaced by the aforementioned first type of the light guiding film 1. In this embodiment, the first side surface 111 of the light guiding film 1 is attached to the photoelectric conversion element 41, so that the microstructure 12 faces toward the incident light beams 30. Preferably, the incident light beams 30 are the sunlight beams, and the photoelectric conversion element 41 is used to convert the sunlight beams into electrical energy.

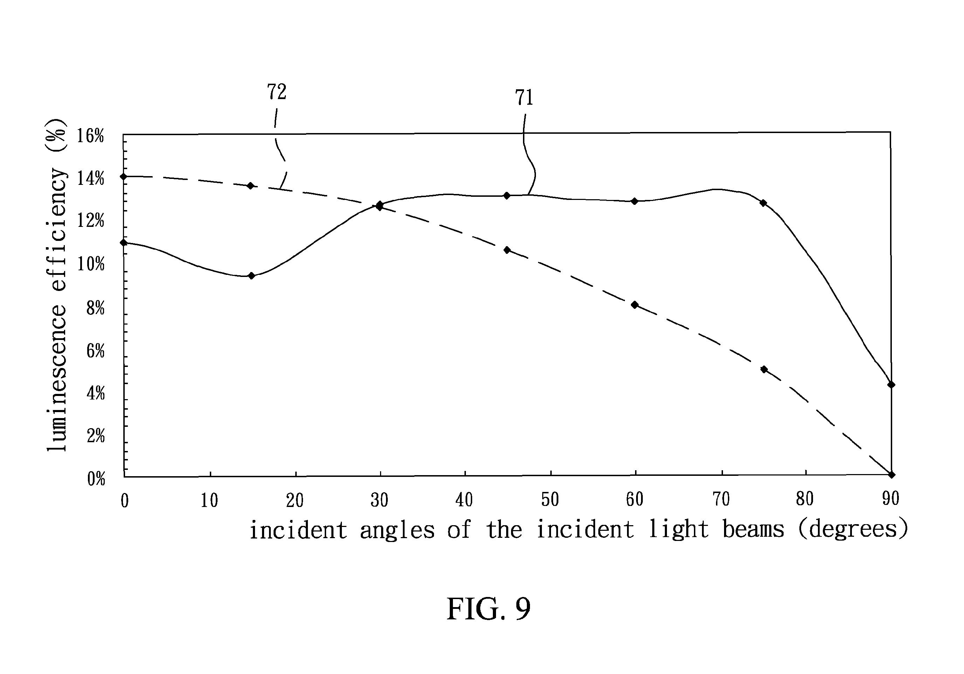

FIG. 9 shows a comparative diagram of the luminescence efficiency of the power generating module of FIG. 8 and the power generating module of comparative example, wherein the power generating module of the comparative example is the film base 11 that has no microstructure 12 and is attached to the photoelectric conversion element 41 directly. Curve 71 in the figure represents the luminescence efficiency of the power generating module of FIG. 8 under different incident angles of the incident light beams, and curve 72 in the figure represents the luminescence efficiency of the power generating module of the comparative example under different incident angles of the incident light beams. As shown in curve 72, the power generating module of comparative example has its greatest luminescence efficiency when the incident angle of the incident light beams is 0 degree. The luminescence efficiency decreases rapidly as the incident angle of the incident light beams increases. In comparison, curve 71 shows that the luminescence efficiency of the power generating module 4 of FIG. 8 is relative high when the incident angles of the incident light beams range from 10 to 80 degrees. This is because the light guiding film 1 can emit light in the normal direction. That is, when the incident angles of the incident light beams range from 10 to 80 degrees (preferably, 30 to 80 degrees), the light guiding film 1 can direct most of the light beams to exit at output angles ranging from 70 to 110 degrees to emit out to illuminate the photoelectric conversion element 41 in the normal direction, which can maintain a relatively high luminescence efficiency. Further, when the incident light beams 30 are sunlight beams, and the power generating module 4 is applied to a vertical window system, it will maintain a relatively high luminescence efficiency due to the specific design of the light guiding film 1 of the present invention. As a result, this vertical window system does not need the excessive horizontal space that the conventional solar cell module requires to generate power nor does it need the conventional solar tracking system. Therefore, the structure of the power generating module 4 is simple, and the manufacturing cost of the power generating module 4 is low.

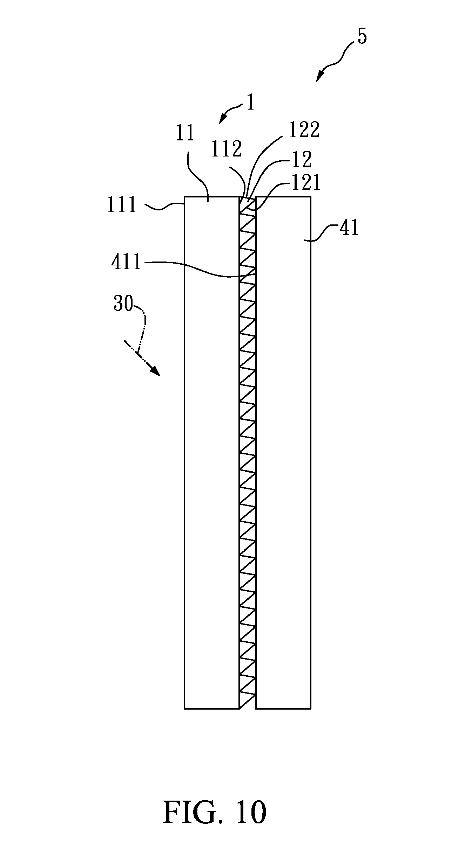

FIG. 10 shows a side view of a power generating module according to another embodiment of the present invention. The power generating module 5 comprises a light guiding film 1 and at least one photoelectric conversion element 41. The light guiding film 1 is the same as the light guiding film 1 as shown in FIGs. 1 to 4, and comprises a film base 11 and at least one microstructure 12. The photoelectric conversion element 41 is used to receive the output light beams 31 from the light guiding film 1. The photoelectric conversion element 41 has a light-receiving surface 411 that is used to receive light beams and is substantially parallel with the film base 11. In this embodiment, the light guiding film 1 is the third type as described above. That is, the value of the first inclination angle θ₁ is 35 degrees, and the value of the second inclination angle θ₂ is 10 degrees. It is to be understood that the light guiding film 1 can be replaced by the aforementioned fourth type of the light guiding film 1. In this embodiment, the second side surface 112 of the light guiding film 1 is attached to the photoelectric conversion element 41, so that the first side surface 111 faces the incident light beams 30. The incident light beams 30 are, preferably, sunlight beams, and the photoelectric conversion element 41 is used to convert the sunlight beams into electrical energy.

While several embodiments of the present invention have been illustrated and described, various modifications and improvements can be made by those skilled in the art. The embodiments of the present invention are therefore described in an illustrative but not restrictive sense. It is intended that the present invention should not be limited to the particular forms as illustrated, and that all modifications which maintain the spirit and scope of the present invention are within the scope defined in the appended claims.

## Claims

1. A light guiding film (1) comprising:
a film base (11), having a first side surface (111) and a second side surface (112) opposite the first side surface; and
at least one microstructure (12), disposed on the first side surface or the second side surface of the film base;
whereby a plurality of incident light beams (30) become a plurality of output light beams (31-34) after passing through the light guiding film, an output angle θ₃ is defined as the angle between the output light beam and the light guiding film, the output angle is defined as 0 degree when the output light beam (32) is downward and parallel with the light guiding film, the output angle is defined as 180 degrees when the output light beam (34) is upward and parallel with the light guiding film, the total luminous flux of the output light beams (31, 33) with the output angles from 70 to 110 degrees is more than 40% of the total luminous flux of the output light beams with the output angles from 0 to 180 degrees.

2. The light guiding film as claimed in Claim 1, wherein the microstructure (12) comprises a first surface (121) and a second surface (122) above the first surface, wherein a first inclination angle θ₁ is between the first surface and a reference plane (20), the reference plane is perpendicular to the film base, a second inclination angle θ₂ is between the second surface and the reference plane.

3. The light guiding film as claimed in Claim 1 or 2, wherein the cross section of the microstructure (12) is substantially triangle.

4. The light guiding film as claimed in one of the preceding Claims, wherein an incident angle θ ₄ is defined as the angle between the incident light beam (30) and a reference plane (20), the reference plane is perpendicular to the film base, the incident angle is defined as positive when the incident light beam is downward, the incident angles of the incident light beams (30) are from 10 to 80 degrees.

5. The light guiding film as claimed in Claim 2, wherein the value of the first inclination angle θ ₁ is between 25 to 60 degrees, and the value of the second inclination angle θ ₂ is between 0 to 15 degrees.

6. The light guiding film as claimed in Claim 2, wherein the value of the angle between the first surface (121) and the second surface (122) is between 25 to 75 degrees.

7. The light guiding film as claimed in of the preceding Claims, wherein the microstructure (12) faces the incident light beams (30).

8. The light guiding film as claimed in of the preceding Claims, wherein the light guiding film is made of a light transmissible material with a refraction index of 1.35 to 1.65, and the light transmittance of the light transmissible material is between 0.75 to 0.95.

9. A power generating module (4; 5), comprising:
a light guiding film (1), comprising:
a film base (11), having a first side surface and a second side surface opposite the first side surface; and
at least one microstructure (12), disposed on the first side surface or the second side surface of the film base, whereby a plurality of incident light beams become a plurality of output light beams after passing through the light guiding film, an output angle is defined as the angle between the output light beam and the light guiding film, the output angle is defined as 0 degree when the output light beam is downward and parallel with the light guiding film, the output angle is defined as 180 degrees when the output light beam is upward and parallel with the light guiding film, the total luminous flux of the output light beams with the output angles from 70 to 110 degrees is more than 40% of the total luminous flux of the output light beams with the output angles from 0 to 180 degrees; and
a photoelectric conversion element (41), disposed adjacent to the first side surface or the second side surface of the film base to receive the output light beams from the light guiding film.

10. The power generating module as claimed in Claim 9, wherein the photoelectric conversion element (41) has a light-receiving surface (411) substantially parallel with the film base (11).

11. The power generating module as claimed in Claim 9 or 10, wherein the incident light beams (30) are sunlight beams.
